(19) Europäisches Patentamt
European Patent Office
Office européen des brevets

(11) **EP 1 716 085 B1**

(12) **FASCICULE DE BREVET EUROPEEN**

(45) Date de publication et mention
de la délivrance du brevet:
**10.04.2019 Bulletin 2019/15**

(21) Numéro de dépôt: **05726420.2**

(22) Date de dépôt: **11.02.2005**

(51) Int Cl.:
***C03C 25/44*** *(2006.01)*

(86) Numéro de dépôt international:
**PCT/FR2005/050087**

(87) Numéro de publication internationale:
**WO 2005/077854 (25.08.2005 Gazette 2005/34)**

(54) **FILS DE VERRE CONDUCTEURS DE L'ELECTRICITE ET STRUCTURES COMPRENANT DE TELS FILS**

ELEKTRISCH LEITENDES GLASGARN UND KONSTRUKTIONEN DAMIT

ELECTRICALLY CONDUCTIVE GLASS YARN AND CONSTRUCTIONS INCLUDING SAME

(84) Etats contractants désignés:
**AT BE BG CH CY CZ DE DK EE ES FI FR GB GR
HU IE IS IT LI LT LU MC NL PL PT RO SE SI SK TR**

(30) Priorité: **12.02.2004 FR 0401426**

(43) Date de publication de la demande:
**02.11.2006 Bulletin 2006/44**

(73) Titulaire: **Saint-Gobain Adfors
92400 Courbevoie (FR)**

(72) Inventeurs:
• **MOIREAU, Patrick
F-73190 CURIENNE (FR)**
• **CEUGNIET, Claire
F-37410 Saint Ours (FR)**

(74) Mandataire: **Saint-Gobain Recherche
Département Propriété Industrielle
39 Quai Lucien Lefranc
93300 Aubervilliers (FR)**

(56) Documents cités:
EP-A- 0 989 103       WO-A-99/44956
GB-A- 1 262 070       US-A- 4 090 984
US-A- 4 209 425

## Description

La présente invention concerne des fils de verre comportant un revêtement conducteur de l'électricité.

Elle concerne également le procédé de fabrication de ces fils, les structures de renforcement formées à partir de ces fils et les matériaux composites incluant ces fils.

De manière classique, les fils de verre de renforcement sont élaborés par étirage mécanique de filets de verre fondu s'écoulant par gravité des multiples orifices de filières remplies de verre en fusion, pour former des filaments qui sont rassemblés en fils de base, lesquels fils sont alors collectés.

Au cours de l'étirage, et avant leur rassemblement en fils, les filaments de verre sont revêtus d'une composition d'ensimage, en général aqueuse, par passage sur un organe ensimeur.

Le rôle de l'ensimage est essentiel à double titre.

Lors de la fabrication des fils, il protège les filaments de l'abrasion résultant du frottement de ces derniers à grande vitesse sur les organes du procédé en agissant comme un lubrifiant. Il permet aussi d'éliminer les charges électrostatiques générées lors de ce frottement. Enfin, il donne de la cohésion au fil en assurant la liaison des filaments entre eux.

Lors de l'utilisation en vue de réaliser des matériaux composites, l'ensimage améliore le mouillage du verre et l'imprégnation du fil par la matrice à renforcer, et il favorise l'adhésion entre le verre et ladite matrice, conduisant ainsi à des matériaux composites à propriétés mécaniques améliorées.

Les fils de verre sous leurs différentes formes (fils continus, coupés ou broyés, mats, grilles, tissus, ...) sont utilisés couramment pour renforcer efficacement des matrices de nature variée, par exemple des matières thermoplastiques ou thermodurcissables et du ciment.

En général, les fils de verre sont rendus conducteurs par l'application d'un revêtement à base de particules aptes à conduire le courant électrique. Le revêtement est obtenu en déposant sur les fils revêtus de l'ensimage les particules conductrices en dispersion ou en suspension dans un milieu aqueux, et en éliminant l'eau par chauffage à une température appropriée.

Les compositions connues pour la réalisation du revêtement précité utilisent en tant que particules conductrices du graphite, du noir de carbone ou des composés organo-métalliques susceptibles de se décomposer en métaux sous l'action de la chaleur, le cas échéant en introduisant un composé carboné apte à donner du carbone par décomposition thermique dans la composition (US-A-3 269 883) ou dans l'ensimage (US-A-3 247 020).

Dans US-A-4 090 984, on utilise une composition de revêtement semi-conducteur comprenant au moins une émulsion polyacrylate, une dispersion de noir de carbone et un agent gélifiant thixotropique. La dispersion de noir de carbone représente 20 à 40 parties pour 100 parties de la composition. Dans l'exemple 1, la teneur en noir de carbone est égale à 11,9 % en poids des matières solides contenues dans la composition.

Dans US-A-4 209 425, il est décrit des câbles électriques qui comprennent un fil d'âme constitué d'une pluralité de fibres de verre sous la forme d'un stratifil 10, d'une tresse 11 et d'un revêtement semi-conducteur 12. Un revêtement de glissement conducteur 13 est déposé sur le fil d'âme avant l'application de trois revêtements subséquents : un revêtement primaire isolant 14, une tresse de renfort 15 et un revêtement externe 16.

La composition de revêtement de glissement conducteur 13 comprend des particules conductrices, notamment en graphite ou en carbone, au moins un tensioactif, un agent gélifiant thixotropique et éventuellement un agent de couplage organosilane et/ou un agent anti-mousse. La teneur en particules conductrices dans la composition est comprise entre 5 et 15 % en poids de matières solides de la composition. Cette composition n'est pas appliquée directement sur les fibres de verre.

WO 99/44956 décrit des fils de verre incorporant plus de 20 % en poids de particules solides inorganiques utilisées en tant que charges. La fonction des particules solides inorganiques est de créer un espace entre les fils de verre ou les filaments de verre qui constituent ces fils de manière à améliorer la pénétration de la résine polymère soit à travers le mat de fils de verre, soit entre les fils ou les filaments lors de la fabrication de composites à matrice polymère renforcée par des fils de verre par moulage. Les particules solides inorganiques peuvent être associées aux fils de verre de différentes manières. Elles peuvent ainsi être ajoutées a) dans la composition primaire aqueuse appliquée sur le verre nu qui, après séchage forme l'ensimage, ou b) dans la composition aqueuse de revêtement secondaire, ou bien être sous la forme d'une poudre qui constitue le revêtement tertiaire.

Avec les compositions qui viennent d'être citées, la teneur en particules conductrices dans le revêtement final reste faible, conduisant de ce fait à un niveau de conductivité électrique faible.

Récemment sont apparus de nouveaux matériaux qui incorporent des fils de verre présentant des propriétés de conduction électrique élevée et pouvant de ce fait être chauffés par effet Joule. Parmi ces matériaux figurent notamment des matériaux composites à matrice organique, du type polymère thermoplastique ou thermodurcissable, ou cimentaire dans lesquels les fils précités remplissent également une fonction de renforcement.

L'amélioration de la conductivité électrique ne doit pas se faire au détriment des autres propriétés. S'agissant des matériaux composites, on doit notamment garder à l'esprit que les fils sont avant tout destinés à renforcer des matrices et par conséquent ils doivent en présenter toutes les qualités.

Notamment, le revêtement conducteur doit :

- assurer la liaison des filaments entre eux et également lier les fils de façon à obtenir des propriétés mécaniques acceptables ou améliorées lorsqu'il s'agit de matériaux composites,
- protéger les fils de verre des agressions mécaniques survenant lors de la mise en oeuvre des structures de renforcement sur les chantiers,
- protéger les fils de verre de la corrosion chimique et des agressions liées à l'environnement de façon à assurer une durabilité satisfaisante, et
- assurer une bonne liaison avec la matrice polymère à renforcer, c'est-à-dire rendre compatibles les fils et la matrice.

La présente invention a pour objet des fils de verre et des structures incorporant des fils de verre pourvus d'un revêtement qui présente une conductivité électrique élevée et qui sont en outre aptes à répondre aux exigences liées au renforcement qui sont mentionnées ci-dessus.

L'invention a aussi pour objet un procédé de fabrication des fils de verre et des structures de fils de verre aptes à conduire le courant électrique.

L'invention a encore pour objet les matériaux composites comprenant une matrice renforcée par les fils ou les structures aptes à conduire l'électricité précités.

Les fils de verre et les structures de fils de verre conformes à l'invention sont revêtus d'une composition de revêtement conducteur de l'électricité qui comprend (en % en poids de matières solides) :

- 6 à 50 % d'un agent filmogène, de préférence 6 à 45 %
- 5 à 40 % d'au moins un composé choisi parmi les agents plastifiants, les agents tensioactifs et/ou les agents dispersants
- 20 à 75 % de particules conductrices de l'électricité
- 0 à 10 % d'un agent dopant
- 0 à 10 % d'un agent épaississant
- 0 à 15 % d'additifs.

Dans le contexte de l'invention, on entend par « fils de verre » aussi bien les fils de base obtenus par rassemblement sans torsion d'une multitude de filaments sous la filière et les assemblages de ces fils, notamment sous forme de stratifils, que les fils ayant subi une opération de torsion et les assemblages de ces fils. Dans les fils de verre conformes à l'invention, les filaments sont revêtus d'une composition d'ensimage compatible notamment avec l'agent filmogène du revêtement conducteur. Le revêtement conducteur de l'électricité vient donc se superposer à l'ensimage déjà présent sur le fil ce qui fait que l'on peut assimiler l'application de ce revêtement à une opération d'enduction.

Toujours dans ce même contexte, par « structures de fils », on entend des structures obtenues par assemblage de fils entrelacés, par exemple des tissus, ou non entrelacés, par exemple des non-tissés sous forme de mat ou de voile de fils continus, et des grilles.

L'agent filmogène conforme à l'invention joue plusieurs rôles : il confère la cohésion mécanique au revêtement en faisant adhérer les particules conductrices au fil de verre et en assurant la liaison de ces particules entre elles, le cas échéant avec la matière à renforcer ; il contribue à lier les filaments les uns aux autres ; enfin il protège les fils contre les endommagements mécaniques et les agressions chimiques et environnementales.

L'agent filmogène est généralement un polymère, de préférence à caractère élastomérique de manière à donner de la souplesse aux fils. Les fils souples s'avèrent particulièrement avantageux pour la réalisation de structures pouvant être collectées sous forme d'enroulement et hautement « conformables » c'est-à-dire qui sont aptes à épouser de manière quasi-parfaite les formes les plus diverses.

L'agent filmogène peut par exemple être choisi parmi les polyvinylpyrrolidones, les polyalcools vinyliques, les polyacryliques (homopolymères ou copolymères), les polymères styréniques, par exemple du type styrène-butadiène (SBR), les polychlorures de vinyle (en particulier sous forme de latex ou de plastisol), les polyuréthanes et les mélanges de ces polymères. De manière générale, on évite les polyoléfines thermoplastiques du fait de leur caractère d'isolant électrique et de leur aptitude élevée au fluage.

Le choix du polymère dépend aussi de la nature de la matrice à renforcer. S'agissant de matières cimentaires, les polyacryliques, les polymères styréniques et les polychlorures de vinyle sont préférés.

Lorsque la teneur en agent filmogène est inférieure à 6 % en poids de matières solides, la cohésion du revêtement est insuffisante. Au-dessus de 50 %, notamment 45 %, la quantité de particules conductrices à introduire est trop faible pour atteindre un niveau de conductivité électrique satisfaisant. De préférence, la quantité d'agent filmogène dans le revêtement représente 10 à 35 % en poids des matières solides, et mieux encore 15 à 35 %.

L'agent plastifiant permet d'abaisser la température de transition vitreuse de l'agent filmogène jusqu'à une valeur de l'ordre de 20°C, ce qui rend le revêtement plus souple, et permet également de limiter le retrait après le traitement thermique. Les polymères obtenus par copolymérisation de butadiène et d'un monomère acrylique sont préférés.

La quantité d'agent plastifiant dans le revêtement représente en général 0 à 15 % en poids des matières solides, de préférence 0 à 10 % et mieux encore 3 à 10 %.

Les agents tensioactifs améliorent la suspension et la dispersion des particules conductrices et favorisent la compatibilité entre les autres constituants et l'eau. De manière à éviter les problèmes de stabilité de la composition de revêtement et de dispersion inhomogène des particules, on préfère utiliser des tensioactifs cationiques ou non ioniques.

La quantité d'agent tensioactif dans le revêtement représente généralement moins de 10 % en poids des matières solides, de préférence 0,5 à 10 %.

Les agents dispersants aident à disperser les particules conductrices dans l'eau et réduisent leur décantation.

La quantité d'agent dispersant dans le revêtement représente généralement 2 à 20 % en poids des matières solides, de préférence 3 à 10 %.

Les agents plastifiants, tensioactifs et dispersants peuvent posséder une ou plusieurs des fonctions propres à chacune des catégories mentionnées précédemment. Le choix de ces agents et de la quantité à utiliser dépend de l'agent filmogène et des particules conductrices.

Ces agents peuvent notamment être choisis parmi :

> les composés organiques, notamment

- les composés polyalkoxylés, aliphatiques ou aromatiques, éventuellement halogénés tels que les alkylphénols éthoxylés/propoxylés, de préférence renfermant 1 à 30 groupes oxyde d'éthylène et 0 à 15 groupes oxyde de propylène, les bisphénols éthoxylés/propoxylés, de préférence renfermant 1 à 40 groupes oxyde d'éthylène et 0 à 20 groupes oxyde de propylène, les alcools gras éthoxylés/propoxylés, de préférence dont la chaîne alkyle comprend 8 à 20 atomes de carbone et renfermant 2 à 50 groupes oxyde d'éthylène et jusqu'à 20 groupes oxyde de propylène. Ces composés polyalkoxylés peuvent être des copolymères blocs ou statistiques,
- les esters d'acide gras polyalkoxylés, par exemple de polyéthylèneglycol, de préférence dont la chaîne alkyle comprend 8 à 20 atomes de carbone et renfermant 2 à 50 groupes oxyde d'éthylène et jusqu'à 20 groupes oxyde de propylène,
- les composés aminés, par exemple les amines, éventuellement alkoxylées, les oxydes d'amine, les alkylamides, les succinates et les taurates de sodium, de potassium ou d'ammonium, les dérivés de sucres notamment du sorbitan, les alkylsulfates, les alkylphosphates de sodium, de potassium ou d'ammonium, et les polyéthers phosphates.

> les composés inorganiques, par exemple les dérivés de la silice, ces composés pouvant être utilisés seuls ou en mélange avec les composés organiques précités.

Si la quantité totale en agents plastifiants, tensioactifs et dispersants est inférieure à 5 %, on constate une mauvaise dispersion des particules conductrices (présence d'agrégats) et/ou une séparation de phase. Lorsque la teneur excède 40 %, les performances mécaniques sont fortement dégradées.

Les particules conductrices de l'électricité permettent de conférer la conductivité électrique aux fils de verre. Conformément à l'invention, ce sont des particules à base de carbone, notamment des particules de graphite et/ou de noir de carbone.

L'origine du graphite, naturelle ou synthétique, n'a pas d'incidence sur la conductivité électrique. On peut donc utiliser indifféremment l'un ou l'autre type de graphite, seul ou en mélange.

Les particules peuvent avoir une forme quelconque, par exemple sphérique, d'écaille ou d'aiguille. Néanmoins, on a constaté que la conductivité électrique d'un mélange de particules de formes différentes est améliorée par rapport à une même quantité de particules de forme identique. De préférence, 30 à 60 % des particules conductrices ont un rapport d'aspect (défini par le rapport de la plus grande dimension à la plus petite) élevé, de préférence variant de 5 à 20, notamment de l'ordre de 10, et de manière avantageuse au moins 15 % des particules se présentent sous la forme d'écaille ou d'aiguilles.

De même que la forme, la taille des particules est un paramètre important au regard de la conductivité électrique. En règle générale, la taille des particules prise dans leur plus grande dimension n'excède pas 250 $\mu$m, de préférence 100 $\mu$m.

De manière avantageuse, on associe aux particules précitées, généralement en graphite, une poudre de noir de carbone conducteur du courant électrique, de granulométrie égale ou inférieure à 1 $\mu$m, de préférence présentant une taille moyenne comprise entre 50 et 100 nm. Les particules de noir de carbone, du fait de leur faible taille permettent de créer des points de contact entre les particules de graphite, ce qui permet d'améliorer encore la conductivité électrique.

De manière préférée, la composition de revêtement conducteur comprend (en % en poids de matières solides) :

- 2,5 à 45 %, et mieux encore 15 à 40 %, de particules de graphite ayant une taille comprise entre 10 et 100 $\mu$m, au moins 5 % en poids de ces particules se présentant sous la forme d'écailles ou d'aiguilles de rapport d'aspect supérieur ou égal à 5
- 0 à 45 %, de préférence 5 à 25 % de particules de graphite de taille inférieure à 10 $\mu$m, de préférence ayant une taille moyenne de l'ordre de 4 $\mu$m,
- 2,5 à 45 %, de préférence 15 à 40 % de particules de noir de carbone ayant une taille inférieure à 1 $\mu$m.

Comme déjà indiqué, la quantité de particules conductrices représente 20 à 75 % du poids des matières solides du revêtement. Si la teneur est inférieure à 20 %, il n'y a pas de conduction électrique car le seuil de percolation n'est pas atteint. Lorsque la teneur dépasse 75 %, une partie des particules n'adhère plus au fil de verre.

L'agent dopant permet d'augmenter la conductivité en apportant des électrons libres ou en favorisant la délocalisation des électrons.

L'agent dopant est choisi parmi les sels organiques tels que le crotonate d'ammonium, le dodécylsulfate de lithium et l'acétylacétonate de cuivre, ou les sels minéraux tels que le polyphosphate d'ammonium, le chlorure de titane ou le chlorure de zinc. De préférence, on utilise le crotonate d'ammonium.

De manière avantageuse, l'agent dopant représente moins de 5 % du poids de matières solides du revêtement. Néanmoins, du fait que le gain de conductivité reste faible par rapport à la quantité introduite et que des problèmes de résistance au vieillissement peuvent survenir, on préfère limiter la teneur en agent dopant à 1 %. Dans la majorité des cas, aucun agent dopant n'est ajouté.

L'agent épaississant permet d'ajuster la viscosité de la composition de revêtement aux conditions d'application sur le fil en stabilisant la dispersion des particules de façon à éviter qu'elles ne décantent, permettant ainsi le dépôt de la quantité désirée sur le fil.

L'agent épaississant est choisi parmi les composés fortement hydrophiles, tels que les carboxyméthylcelluloses, les gommes, par exemple de guar ou de xanthane, les alginates, les polyacryliques, les polyamides et les mélanges de ces composés.

La quantité d'épaississant, lorsqu'il est utilisé, varie en fonction de la nature du composé (du grade dans le cas des carboxyméthylcelluloses).

De préférence, la teneur en agent épaississant est inférieure à 10 % en poids des matières solides du revêtement.

Le revêtement conducteur peut encore comprendre les additifs habituels pour fils de verre, notamment des promoteurs d'adhésion permettant d'améliorer le couplage entre le verre et la matière à renforcer tels que des silanes, des agents lubrifiants et/ou anti-mousse tels que des huiles minérales, des esters gras, par exemple le palmitate d'isopropyle et le stéarate de butyle, ou des polymères organiques, des agents complexants, tels que les dérivés de l'EDTA ou de l'acide gallique.

De préférence, la quantité totale en additifs est inférieure à 10 % en poids des matières solides du revêtement.

La composition de revêtement conducteur apte à revêtir les fils de verre conformes à l'invention comprend des constituants cités précédemment et de l'eau.

La teneur en eau dans la composition de revêtement dépend des conditions d'application, notamment de la viscosité et de la teneur en particules conductrices à déposer. En règle générale, la quantité d'eau est déterminée de manière à obtenir une viscosité supérieure ou égale à 190 mPa.s, de préférence inférieure à 40000 mPa.s, avantageusement inférieure à 20000 mPa.s mieux encore inférieure à 10000 mPa.s, notamment inférieure ou égale à 5400 mPa.s.

La préparation de la composition se fait de manière conventionnelle, par introduction des différents constituants dans le milieu aqueux, de préférence individuellement, sous une agitation suffisante pour maintenir les particules conductrices en dispersion ou en suspension.

Lorsqu'un agent épaississant est utilisé, il est introduit en premier sous la forme d'une solution aqueuse, de préférence chauffée à environ 80°C afin d'avoir une meilleure dissolution.

En général, la composition de revêtement est utilisée presque immédiatement après avoir été préparée, mais on peut encore l'utiliser après une période de conservation d'environ six mois à une température de 20 à 25°C. Le cas échéant, une agitation vigoureuse permet de disperser à nouveau les particules qui ont décanté sans que cela affecte les qualités de la composition.

Conformément à l'invention, le procédé de fabrication des fils de verre et des structures de fils revêtus du revêtement conducteur de l'électricité comprend les étapes consistant à :

- revêtir des fils de verre ou des structures de fils de verre de la composition de revêtement conducteur précitée, et
- chauffer lesdits fils ou lesdites structures ainsi revêtus à une température suffisante pour éliminer l'eau et consolider le revêtement conducteur.

L'application de la composition est effectuée sur des fils de verre à différents stades du procédé après fibrage, de préférence sur des fils provenant d'enroulements, par exemple des stratifils, ou sur des structures dans lesquelles les fils sont assemblés de diverses manières : par superposition de fils continus disposés de manière aléatoire (mat ou voile) ou ordonnée (grille) ou par tissage avec entrelacement des fils.

Selon un mode de réalisation préféré, le revêtement du fil ou de la structure de fils est effectué par immersion dans un bain de la composition de revêtement conducteur. Dans le bain, le fil ou la structure passe dans un dispositif permettant de contrôler la quantité de composition de revêtement à déposer.

Dans le cas de fils, le dispositif peut être une filière disposée dans le bain, de préférence conique dont l'angle du cône est défini de telle sorte que le fil pénétrant par l'ouverture de plus grande dimension puisse être revêtu par la composition de manière uniforme sur l'ensemble de sa surface.

S'agissant de structures de fils, le dispositif peut être un foulard, du type utilisé dans l'industrie textile, disposé à la sortie du bain.

Eventuellement, avant de passer au travers de la filière ou sur le foulard, le fil ou la structure peut passer sur un dispositif visant à « ouvrir » les fils et permettre une meilleure imprégnation des filaments. Ce dispositif peut être constitué d'une ou plusieurs séries de barres formant embarrages lorsqu'il s'agit de traiter le fil ou d'une série de rouleaux pour le traitement de structures de fils.

A la sortie du bain, le fil ou la structure est traité thermiquement pour éliminer l'eau et consolider le revêtement. En règle générale, la température de traitement est supérieure à environ 105°C et inférieure à environ 220°C, de préférence inférieure à 160°C. Pour prévenir le cloquage (en anglais « blistering ») du revêtement provoqué par une élimination rapide de l'eau, on préfère chauffer le fil ou la structure à une température proche de la température minimale indiquée, au besoin en augmentant la durée de traitement, ou effectuer le traitement en continu sur toute la gamme de température par paliers successifs ou avec un gradient de température. De préférence, la température maximale reste inférieure à environ 150°C, et mieux encore inférieure à 130°C.

On peut pour cela utiliser tout dispositif de chauffage approprié, par exemple un four à infrarouge, ou un dispositif permettant de chauffer le fil ou la structure par contact, par exemple un dispositif constitué d'un ou plusieurs tambours rotatifs chauffants.

La température et la durée du traitement sont choisies en fonction du type de dispositif utilisé de manière à obtenir un revêtement consolidé. A titre indicatif, le traitement dans un four peut être réalisé de manière satisfaisante à une température de l'ordre de 105°C pendant une durée qui n'excède généralement pas 3 heures.

Après le traitement thermique, le fil de verre est collecté, par exemple sous forme d'enroulements, ou bien il est déposé sur un support récepteur en translation pour former un mat.

Le fil de verre et la structure de fils conformes à l'invention se caractérisent par le fait qu'ils sont dotés de propriétés de conduction électrique tout en ayant les qualités propres à assurer une fonction de renforcement. Le fil et la structure ont ceci de remarquable que la quantité de revêtement conducteur peut représenter jusqu'à 200 % de leur poids total, plus généralement de l'ordre de 20 à 60 %, et que cette teneur relativement élevée en particules conductrices leur confèrent un niveau de performances tout à fait intéressant. Une appréciation de ce niveau est donnée par la valeur de la résistivité électrique volumique (égale à l'inverse de la conductivité électrique volumique) qui fait référence dans le domaine des fils conducteurs. La résistivité électrique volumique du fil selon l'invention est inférieure à 1000 $\Omega$.cm, de préférence 100 $\Omega$.cm, avantageusement 10 $\Omega$.cm et mieux encore 1 $\Omega$.cm. Les fils et les structures présentent une résistivité électrique volumique variant de 10 à 100 $\Omega$.cm peuvent être utilisés pour le chauffage par effet Joule. Ceux dont ladite résistivité est inférieure ou égale à 1 $\Omega$.cm sont plus particulièrement adaptés au blindage électromagnétique.

Le fil conducteur et les fils entrant dans la constitution de la structure conforme à l'invention peuvent être en verre de toute sorte, par exemple E, C, R et AR. Le verre E est préféré.

Le diamètre des filaments de verre constituant les fils peut varier dans une large mesure, par exemple de 5 à 30 $\mu$m. De la même manière, de larges variations peuvent survenir dans la masse linéique du fil qui peut aller de 68 à 2400 tex selon les applications visées.

Le fil de verre conducteur et les structures conductrices conformes à l'invention peuvent être utilisés pour renforcer diverses matières et former ainsi des matériaux composites conducteurs aptes notamment à être chauffés par effet Joule. Comme cela a déjà été dit, de tels matériaux composites peuvent être utilisés pour le chauffage de bâtiments, le dégivrage de routes, de ponts ou de pistes d'atterrissage.

Les structures peuvent, en tant que telles, servir d'éléments de chauffage ou de blindage électromagnétique appliqués à la surface ou intégrés dans les parois murales ou le sol.

En tant qu'éléments de blindage, les structures ont pour but d'atténuer les ondes électromagnétiques préjudiciables au bon fonctionnement des appareils électroniques, ou de limiter, voire d'empêcher, l'usage de téléphones portables dans certains lieux publics ou privés (hôpitaux, cinémas, prisons, ...)

Les structures sous forme de grilles peuvent être incorporées notamment dans des ouvrages d'art, par exemple des ponts, pour limiter les effets de pile liés à la présence d'éléments métalliques qui augmentent les risques de corrosion.

Les exemples donnés ci-après permettent d'illustrer l'invention sans toutefois la limiter.

Dans ces exemples, on utilise les méthodes suivantes :

➤ La perte au feu est mesurée de la manière suivante : dans un creuset en porcelaine (masse M1), on introduit une quantité déterminée (environ 1 gramme) de fils coupés. Le creuset est chauffé dans un four à 105°C pendant 1 heure pour évaporer l'eau adsorbée. A la sortie du four et après refroidissement, le creuset est pesé (masse M2), puis chauffé dans un four à 700°C pendant 5 heures. On pèse le creuset à la sortie du four après refroidissement dans des conditions anhydres (masse M3).

La perte au feu est égale à : M2 - M3/ M2 - M1.

➤ La contrainte à la rupture en traction des fils est mesurée dans les conditions suivantes.

Les extrémités d'une mèche d'un fil de base de 2000 tex, d'une longueur de 240 mm, sont placées entre des mors plats garnis de Vulcolan® sur une distance de 70 mm. La mèche est étirée à la vitesse de 100 mm/min jusqu'à la rupture. La contrainte est exprimée en MPa.

➤ La résistivité volumique est obtenue par le calcul à partir de la relation :

$$\rho = R \times S / l$$

dans laquelle

$\rho$ est la résistivité, en $\Omega$.cm

R est la résistance, en $\Omega$

S est la section du fil, en cm$^2$

l est la longueur de la fibre, en cm.

La résistance R est mesurée au moyen d'un ohm-mètre, la distance entre les deux électrodes étant de 20 cm.

➤ Le blindage électromagnétique, en dB, est mesuré dans les conditions de la norme MIL-STD-285 (27 juin 1956) entre 100 MHz et 2,7 GHz.

## EXEMPLE 1

### a) préparation de la composition de revêtement

On prépare une composition comprenant (en % en poids de matières solides) :

| | |
|---|---|
| - agent filmogène : polyvinylpyrrolidone[1] | 20 |
| - agent épaississant : carboxyméthylcellulose[2] | 2 |
| - plastifiants : | |
| • bisphénol A bis(polyéthylèneglycol)éther[3] | 16,5 |
| • octylphénoxypoly(éthylènoxy)éthanol[4] | 8,5 |
| - dispersant cationique[5] | 3 |
| - particules conductrices | |
| • poudre de graphite naturel[6] (taille moyenne des particules : 3 $\mu$m) | 30 |
| • graphite synthétique expansé [7] sous forme d'écailles (taille des particules : 10-50 $\mu$m) | 10 |
| • poudre de graphite naturel[8] (taille moyenne des particules : 5 $\mu$m) | 10 |

La composition est préparée par ajout des constituants dans un récipient contenant de l'eau à 80°C, maintenue sous agitation vigoureuse, l'agent épaississant étant introduit en premier et les particules conductrices en dernier.

La viscosité de la composition est égale à 3800 mPa.s à 20°C.

### b) obtention du fil de verre

Un fil de verre composé de 4000 filaments de 15,8 $\mu$m de diamètre (masse linéique : 2000 tex) déroulé à partir d'un stratifil est immergé dans un bain de la composition obtenue sous a). Le fil pénètre dans le bain par un guide-fil à la vitesse de 2,5 m/min, passe ensuite au travers d'une filière conique (petit diamètre : 2,2 mm) et à la sortie du bain il est enroulé sur un cadre tournant autour d'un axe. Le cadre est placé dans un four chauffé à 105°C pendant 3 heures.

Le fil présente les caractéristiques suivantes :

➤ Perte au feu : 21,0 %

➤ Résistivité : 7,8 Ω.cm (écart-type : 2,3)

➤ Contrainte de rupture en traction : 863 MPa (écart-type : 23)

## EXEMPLE 2

On procède dans les conditions de l'exemple 1, la composition de revêtement conducteur comprenant (en % en poids de matières solides) :

| | |
|---|---|
| - agent filmogène : polyvinylpyrrolidone[1] | 20 |
| - agent épaississant : carboxyméthylcellulose[2] | 2 |
| - plastifiants : | |
| • bisphénol A bis(polyéthylèneglycol)éther[3] | 16 |
| • octylphénoxypoly(éthylènoxy)éthanol[4] | 7 |
| - dispersant cationique[5] | 5 |
| - particules conductrices | |
| • poudre de graphite naturel[6] (taille moyenne des particules : 3 $\mu$m) | 25 |
| • graphite synthétique expansé [7] sous forme d'écailles (taille des particules : 10-50 $\mu$m) | 15 |
| • poudre de graphite synthétique[9] (taille moyenne des particules : 10 $\mu$m) | 10 |

La viscosité de la composition est égale à 5400 mPa.s à 20°C.

Le fil présente une perte au feu égale à 20,0 %.

Les mesures de la résistivité et la contrainte de rupture en traction du fil avant et après vieillissement accéléré sont les suivantes (l'écart-type est donné entre parenthèses) :

| Temps (jour) | t = 0 | t = 1 | t = 14 |
|---|---|---|---|
| Résistivité (Ω.cm) | 1,55 (0,4) | 1,7 (0,2) | 1,8 (0,2) |
| Contrainte de rupture en traction (MPa) | 1130 (62) | 1044 (50) | 950 (78) |

Après 14 jours de vieillissement, la résistivité est sensiblement inchangée, et la contrainte de rupture en traction est égale à 84 % de sa valeur initiale.

## EXEMPLES 3 ET 4

Ces exemples illustrent l'effet de quantité de particules conductrices de rapport d'aspect élevé sur la résistivité.

On procède dans les conditions de l'exemple 1, modifié en ce que l'on utilise les compositions suivantes (en % en poids de matières solides) :

| | | |
|---|---|---|
| - agent filmogène : polyvinylpyrrolidone[1] | | 20,0 |
| - agent épaississant : carboxyméthylcellulose[2] | | 2,00 |
| - plastifiants : | | |
| • bisphénol A bis(polyéthylèneglycol)éther[3] | | 10,25 |
| • octylphénoxypoly(éthylènoxy)éthanol[4] | | 10,25 |
| - dispersant cationique[5] | | 7,50 |
| - particules conductrices | | |
| | Ex. 3 | Ex. 4 |
| • graphite [10] sous forme d'écailles (taille des particules : 10-50 $\mu$m) | 2,5 | 15,0 |
| • poudre de graphite synthétique [9] (taille moyenne des particules : 10 $\mu$m) | 47,5 | 35,0 |

La viscosité des compositions est égale à 4900 mPa.s et 5400 mPa.s à 20°C, respectivement.

Les fils obtenus présentent les caractéristiques suivantes (l'écart-type est donné entre parenthèses) :

|  | Ex. 3 | Ex. 4 |
|---|---|---|
| Perte au feu (%) | 20,4 | 19,8 |
| Résistivité ($\Omega$.cm) | 2,9 (0,8) | 2,3 (0,3) |
| Contrainte de rupture en traction (MPa) | 1320 (115) | 1348 (58) |

On constate qu'une augmentation de la proportion relative en particules sous forme d'écailles, à quantité totale équivalente en particules, permet de réduire la résistivité et donc d'accroître la conductivité électrique.

## EXEMPLE 5

On procède dans les conditions de l'exemple 1, modifié en ce que le fil est composé de 800 filaments de 13,6 $\mu$m de diamètre (masse linéique : 300 tex), que le petit diamètre de la filière est égal à 1,2 mm et que la composition de revêtement conducteur comprend (en % en poids de matières solides) :

| | |
|---|---|
| - agent filmogène : polyvinylpyrrolidone[1] | 20,0 |
| - agent épaississant : carboxyméthylcellulose[2] | 2,0 |
| - plastifiants : | |
| • bisphénol A bis(polyéthylèneglycol)éther[3] | 17,0 |
| • octylphénoxypoly(éthylènoxy)éthanol[4] | 6,0 |
| - dispersant non ionique[11] | 5,0 |
| - particules conductrices | |
| • graphite synthétique expansé[7] sous forme d'écailles (taille des particules : 10-50 $\mu$m) | 25,0 |
| • poudre de noir de carbone[12] (taille moyenne des particules : 50 nm) | 25,0 |

La viscosité de la composition est égale à 4800 mPa.s à 20°C.

Le fil présente les caractéristiques suivantes (l'écart-type est donné entre parenthèses) :

➤ Perte au feu : 14,4 %

➤ Résistivité : 0,3 $\Omega$.cm (0,04); identique après 15 semaines de stockage à 20°C.

➤ Contrainte de rupture en traction : 1361 (93) MPa.

## EXEMPLE 6

On procède dans les conditions de l'exemple 1, la composition de revêtement conducteur comprenant (en % en poids de matières solides) :

| | |
|---|---|
| - agents filmogènes | |
| • polymère acrylique[13] | 33,8 |
| • copolymère acrylique[14] | 10,0 |
| - tensio-actifs : | |
| • 2,4,7,9-tétraméthyl-5-décyn-4,7-diol[15] | 0,2 |
| • alcool $C_{12}$-$C_{14}$ 10 OE[16] | 1,0 |
| - dispersant non ionique[11] | 5,0 |
| - particules conductrices | |
| • graphite synthétique expansé[7] sous forme d'écailles (taille des particules : 10-50 $\mu$m) | 20,0 |
| • poudre de graphite synthétique[17] (taille des particules : 1-10 $\mu$m) | 10,0 |
| • poudre de noir de carbone[12] (taille moyenne des particules : 50 nm) | 20,0 |

La viscosité de la composition est égale à 590 mPa.s à 20°C.

Le fil présente une perte au feu égale à 42,1 %.

La résistivité et la contrainte de rupture en traction du fil avant et après vieillissement accéléré sont données ci-après (l'écart-type figure entre parenthèses) :

| Temps (jour) | t = 0 | t = 1 | t = 3 |
|---|---|---|---|
| Résistivité ($\Omega$.cm) | 0,18 (0,01) | 0,18 (0,03) | 0,18 (0,01) |
| Contrainte de rupture en traction (MPa) | 1876 (115) | 1695 (78) | 1565 (43) |

| Temps (jour) | t = 7 | t = 14 |
|---|---|---|
| Résistivité ($\Omega$.cm) | 0,17 (0,02) | 0,15 (0,01) |
| Contrainte de rupture en traction (MPa) | 1503 (158) | 1697 (38) |

La résistance des fils dans les conditions de vieillissement accéléré est excellente : le niveau de performance élevé, notamment de la contrainte de rupture en traction, est maintenu dans le temps.

## EXEMPLE 7

On procède dans les conditions de l'exemple 1, la composition de revêtement conducteur comprenant (en % en poids de matières solides) :

| | |
|---|---|
| - agents filmogènes | |
| • polymère acrylique[13] | 38,9 |
| • copolymère acrylique[14] | 11,5 |
| - tensio-actifs : | |
| • 2,4,7,9-tétraméthyl-5-décyn-4,7-diol[15] | 0,2 |
| • alcool $C_{12}$-$C_{14}$ 10 OE[16] | 1,0 |
| - dispersant non ionique[11] particules conductrices | 4,4- |
| • graphite synthétique expansé [7] sous forme d'écailles (taille des particules : 10-50 $\mu$m) | 22,0 |
| • poudre de noir de carbone[12] (taille moyenne des particules : 50 nm) | 22,0 |

La viscosité de la composition est égale à 1820 mPa.s à 20°C.

Le fil présente les caractéristiques suivantes :

➢ Perte au feu : 39,8 %

➢ Résistivité
t = 0 jour : 0,17 $\Omega$.cm (écart-type : 0,01)
t = 14 jours : 0,16 $\Omega$.cm (écart-type : 0,03)

➢ Contrainte de rupture en traction
t = 0 jour : 1864 MPa (écart-type : 50)
t = 14 jours : 1648 MPa (écart-type : 72)

## EXEMPLE 8

On procède dans les conditions de l'exemple 1, la composition de revêtement conducteur comprenant (en % en poids de matières solides) :

| | |
|---|---|
| - agents filmogènes : | |
| • polymère acrylique[13] | 23,8 |
| • copolymère acrylique[14] | 20,0 |
| - plastifiants/tensio-actifs : | |
| • tensioactif non ionique[15] | 0,2 |

(suite)

| | |
|---|---|
| • alcool gras éthoxylé[16] | 1,0 |
| - dispersant cationique[5] | 5,0 |
| - particules conductrices | |
| • graphite synthétique expansé[10] sous forme d'écailles (taille des particules : 10-50 $\mu$m) | 20,0 |
| • poudre de graphite synthétique[17] (taille des particules : 1-10 $\mu$m) | 10,0 |
| • poudre de noir de carbone[12] (taille des particules : 50 nm) | 20,0 |

La viscosité de la composition est égale à 190 mPa.s à 20°C.

Le fil présente les caractéristiques suivantes :

➤ Perte au feu : 39,51 %

➤ Résistivité : 0,17 $\Omega$.cm

➤ Contrainte de rupture en traction : 1673,3 MPa

## EXEMPLE 9

Cet exemple illustre l'influence de la quantité de revêtement sur la conductivité électrique et les propriétés mécaniques du fil.

### a) **préparation de** la **composition de** revêtement

On prépare une composition comprenant (en % en poids de matières solides) :

| | |
|---|---|
| - agent filmogène : | |
| • copolymère styrène-butadiène [18] | 46,5 |
| - dispersant non-ionique[11] | 6,0 |
| - agent anti-mousse[19] | 1,0 |
| - particules conductrices | |
| • graphite synthétique expansé[7] sous forme d'écailles (taille des particules : 10-50 $\mu$m) | 18,6 |
| • poudre de graphite synthétique[17] (taille des particules : 1-10 $\mu$m) | 9,3 |
| • poudre de noir de carbone[12] (taille des particules : 50 nm) | 18,6 |

La composition est préparée par ajout des constituants dans un récipient contenant de l'eau à température ambiante (environ 25°C), sous agitation vigoureuse, les particules conductrices étant introduites en dernier.

La composition présente une viscosité égale à 800 mPa.s à 20°C.

### b) **obtention du fil de verre**

On procède dans les conditions de l'exemple 1 modifiées en ce que le fil de verre est constitué de 800 filaments de diamètre égal à 13 $\mu$m (masse linéique : 275 tex).

On dépose sur le fil de verre une quantité variable de composition de revêtement conducteur (essais 1 à 3).

| | Essai 1 | Essai 2 | Essai 3 |
|---|---|---|---|
| Perte au feu (%) | 21,9 | 30,6 | 45,7 |
| Résistivité volumique ($\Omega$.cm) | 0,23 | 0,16 | 0,14 |
| Contrainte de rupture en traction (MPa) | 2035 | 2045 | 2059 |

On constate que la résistivité volumique diminue en fonction de la quantité de composition de revêtement déposée sur le fil, ce qui signifie que la conductivité électrique est augmentée. Dans le même temps, le niveau de contrainte de rupture en traction est quasiment inchangé (l'augmentation observée n'étant pas significative).

## EXEMPLE 10

On procède dans les conditions de l'exemple 9 en faisant varier le rapport massique des particules conductrices (P) à la somme des particules conductrices (P) et de l'agent filmogène (F). La perte au feu est comprise entre 21 et 23 %.

| Essai | P/P+F (%) | Résistivité volumique ($\Omega$.cm) |
|---|---|---|
| 1 | 25 | 4,11 |
| 2 | 30 | 1,14 |
| 3 | 35 | 0,75 |
| 4 | 40 | 0,42 |
| 5 | 50 | 0,23 |
| 6 | 60 | 0,24 |

De ces valeurs, on déduit que le seuil de percolation (correspondant au rapport P/P+F à partir duquel le fil présente une conductivité satisfaisante) est compris entre 30 et 35 %.

## EXEMPLE 11

### a) préparation de la composition de revêtement

On procède dans les conditions de l'exemple 9, la composition de revêtement comprenant (en % en poids de matières solides) :

| | |
|---|---|
| - agent filmogène : | |
| • copolymère styrène-butadiène [20] | 46,5 |
| - dispersant non-ionique[11] | 6,0 |
| - agent anti-mousse[19] | 1,0 |
| - particules conductrices | |
| • graphite synthétique expansé[7] sous forme d'écailles (taille des particules : 10-50 $\mu$m) | 18,6 |
| • poudre de graphite synthétique[17] (taille des particules : 1-10 $\mu$m) | 9,3 |
| • poudre de noir de carbone[12] (taille des particules : 50 nm) | 18,6 |

La composition présente une viscosité égale à 230 mPa.s à 20°C.

### b) obtention du tissu de verre

Un tissu de verre (masse surfacique : 165 g/m$^2$) présentant une maille carrée de 35 mm et une épaisseur de 0,4 mm est immergé dans un bac de 300 mm de large rempli de la composition obtenue sous a). A la sortie du bac, le tissu est exprimé par passage entre les deux rouleaux d'une calandre (pression : 0,6 bar ; vitesse de rotation : 0,5 m/min.), puis il entre dans un four à air comprenant 4 compartiments chauffés à 90°C, 130°C, 150°C et 90°C, respectivement. Le temps de séjour dans chaque compartiment est de 2 minutes.

Différents essais ont été réalisés avec un taux de revêtement (masse de revêtement/masse de tissu non revêtu) de 30 % (Essai 1), 60 % (Essai 2) et 115 % (Essai 3). Plusieurs passages dans le bain d'imprégnation ont été effectués pour d'obtenir les taux les plus élevés (Essais 2 et 3).

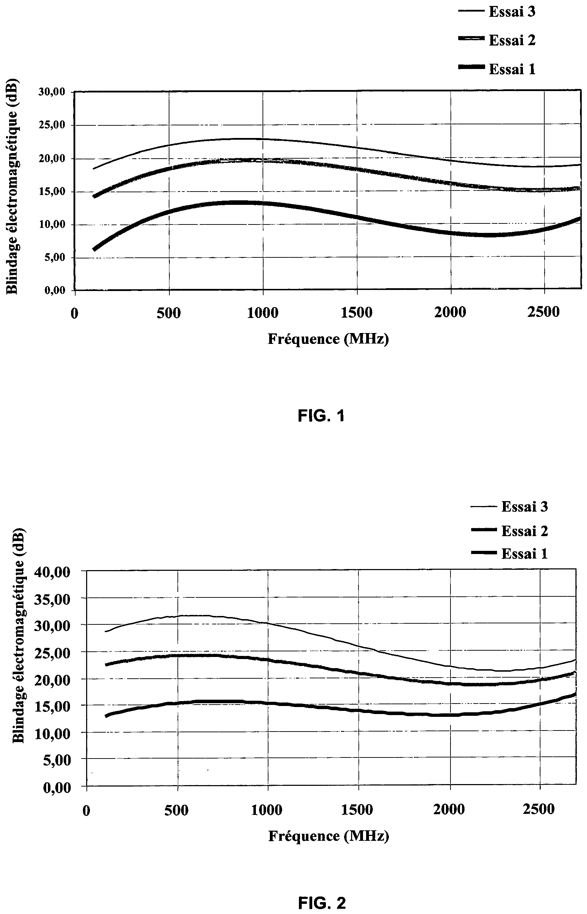

Sur la Figure 1 est reportée la courbe du blindage électromagnétique en fonction de la fréquence.

Le tissu selon l'invention présente une valeur de blindage supérieure à 5 dB et inférieure à 25 dB selon le taux de revêtement, sur l'ensemble de la gamme de fréquence examinée.

On précise qu'une valeur de blindage égale à 10 dB correspond à une atténuation de l'intensité du champ électrique d'un facteur 3, une valeur de 20 dB correspond à une atténuation d'un facteur 10 et une valeur de 30 dB correspond à une atténuation d'un facteur 30.

Les essais 1 à 3 présentent des valeurs du même ordre de grandeur que les tissus disponibles qui conviennent pour le blindage électromagnétique. Notamment, le niveau de performance de l'essai 2 est comparable à ce qui est obtenu avec un tissu à base de fils de cuivre et de fils de verre co-mêlés et pourvus d'un revêtement conducteur, disposés en trame et en chaîne. Ce tissu n'est toutefois pas entièrement satisfaisant car d'une part le contact des fils de cuivre aux points de croisement n'est pas toujours assuré, et d'autre part le cuivre a tendance s'oxyder pour former une couche de surface isolante, ce qui entraîne une diminution de la conductivité électrique.

**EXEMPLE 12**

On procède dans les conditions de l'exemple 11 modifié en ce que la composition de revêtement comprend (en % en poids de matières solides) :

|  |  |
|---|---|
| - agent filmogène : | |
| • copolymère styrène-butadiène [20] | 37,0 |
| - dispersant non-ionique[11] | 7,0 |
| - agent anti-mousse[19] | 1,0 |
| - particules conductrices | |
| • graphite synthétique expansé[7] | 22,0 |
| • poudre de graphite synthétique[17] | 11,0 |
| • poudre de noir de carbone[12] | 22,0 |

La composition présente une viscosité égale à 545 mPa.s à 20°C.

Le tissu a été imprégné avec un taux de revêtement égal à 32 % (Essai 1), 64 % (Essai 2) et 160 % (Essai 3).

Sur la Figure 2 est reportée la courbe du blindage électromagnétique en fonction de la fréquence.

On observe que les essais 1 à 3 présentent des niveaux de performance améliorés par rapport à ceux de l'exemple 11.

(1) Commercialisé sous la référence « LUVISKOL® K 90 » par la Société BASF

(2) Commercialisé sous la référence « BLANOSE® 7 MC » par la Société AQUALON

(3) Commercialisé sous la référence « SIMULSOL® BPPE » par la Société SEPPIC

(4) Commercialisé sous la référence « ANTAROX® CA 630 » par la Société RHODIA HPCII

(5) Commercialisé sous la référence « SOLSPERSE® 20000 » par la Société AVECIA

(6) Commercialisé sous la référence « GK UF2 96/97 » par la Société KROPFMÜLH

(7) Commercialisé sous la référence « GRAFPOWDER® TG 407 » par la Société UCAR

(8) Commercialisé sous la référence « GK UF4 96/97 » par la Société KROPFMÜLH

(9) Commercialisé sous la référence « SPF 16 » par la Société UCAR

(10) Commercialisé sous la référence « GRAFPOWDER® TG 406 » par la Société UCAR

(11) Commercialisé sous la référence « SOLSPERSE® 27000 » par la Société AVECIA

(12) Commercialisé sous la référence « VULCAN® XC 72R » par la Société CABOT S.A.

(13) Commercialisé sous la référence « LATEX 651 » par la Société UCAR

(14) Commercialisé sous la référence « CARBOSET® 514 W » par la Société NOVEON

(15) Commercialisé sous la référence « SURFYNOL® 104-PA » par la Société AIR PRODUCTS

(16) Commercialisé sous la référence « SIMULSOL® P10 » par la Société SEPPIC

(17) Commercialisé sous la référence « SPF 17 » par la Société UCAR

(18) Commercialisé sous la référence « STYRONAL® ND430 » par la Société BASF

(19) Commercialisé sous la référence « TEGO FOAMEX® 830 » par la Société DEGUSSA

(20) Commercialisé sous la référence « STYRONAL® D517 » par la Société BASF

**Revendications**

1.  Fil de verre ou structure de fils de verre revêtu d'une composition de revêtement conducteur de l'électricité qui comprend en % en poids de matières solides :

- 6 à 50 % d'un agent filmogène, de préférence 6 à 45 %
- 5 à 40 % d'au moins un composé choisi parmi les agents plastifiants, les agents tensioactifs et/ou les agents dispersants
- 20 à 75 % de particules conductrices de l'électricité
- 0 à 10 % d'un agent dopant
- 0 à 10 % d'un agent épaississant
- 0 à 15 % d'additifs.

**2.** Fil ou structure selon la revendication 1, **caractérisé en ce que** l'agent filmogène est un polymère, de préférence à caractère élastomérique.

**3.** Fil ou structure selon la revendication 2, **caractérisé en ce que** l'agent filmogène est choisi parmi les polyvinylpyrrolidones, les polyalcools vinyliques, les polyacryliques, les polymères styréniques, les polychlorures de vinyle, les polyuréthanes et les mélanges de ces polymères.

**4.** Fil ou structure selon l'une des revendications 1 à 3, **caractérisé en ce que** l'agent plastifiant, tensioactif et/ou dispersant est choisi parmi les composés polyalkoxylés, aliphatiques ou aromatiques, éventuellement halogénés, les esters d'acide gras polyalkoxylés, les composés aminés, les dérivés de la silice et les mélanges de ces composés.

**5.** Fil ou structure selon l'une des revendications 1 à 4, **caractérisé en ce que** les particules conductrices sont à base de carbone, notamment sont des particules de graphite et/ou de noir de carbone.

**6.** Fil ou structure selon la revendication 5 **caractérisé en ce que** la taille des particules n'excède pas 250 $\mu$m, de préférence 100 $\mu$m.

**7.** Fil ou structure selon l'une des revendications 1 à 6, **caractérisé en ce que** 30 à 60 % des particules ont un rapport d'aspect qui varie de 5 à 20.

**8.** Fil ou structure selon l'une des revendications 1 à 7, **caractérisé en ce qu'**au moins 15 % des particules ont une forme d'écaille ou d'aiguille.

**9.** Procédé de préparation d'un fil de verre ou d'une structure de fils de verre selon l'une des revendications 1 à 8 qui comprend les étapes consistant à

- revêtir un fil de verre ou une structure de fils de verre d'une composition de revêtement conducteur qui comprend en % en poids de matières solides :

- 6 à 50 % d'un agent filmogène, de préférence 6 à 45 %
- 5 à 40 % d'au moins un composé choisi parmi les agents plastifiants, les agents tensioactifs et/ou les agents dispersants
- 20 à 75 % de particules conductrices de l'électricité
- 0 à 10 % d'un agent dopant
- 0 à 10 % d'un agent épaississant

- 0 à 15 % d'additifs, et
- chauffer ledit fil ou ladite structure revêtu à une température suffisante pour éliminer l'eau et consolider le revêtement conducteur.

**10.** Procédé selon la revendication 9, **caractérisé en ce que** revêtement est effectué par immersion dans un bain de la composition de revêtement conducteur.

**11.** Procédé selon la revendication 9 ou 10, **caractérisé en ce que** le chauffage est effectué à une température supérieure à environ 105°C et inférieure à environ 220°C, de préférence inférieure à environ 160°C.

**12.** Structure de fils de verre selon l'une des revendications 1 à 8, **caractérisée en ce qu'**elle se présente sous la forme d'un assemblage de fils entrelacés, par exemple un tissu, ou non entrelacés, par exemple un non tissé tel qu'un mat ou un voile de fils continu, ou une grille.

**13.** Structure selon la revendication 12, **caractérisée en ce qu'**elle présente une valeur de blindage électromagnétique comprise entre 5 et 50 dB, de préférence entre 5 et 35 dB, mesuré entre 100 MHz et 2,7 GHz.

**14.** Matériau composite comprenant une matrice renforcée par des fils de verre ou une structure de fils de verre selon l'une des revendications 1 à 8, 12 ou 13.

**15.** Matériau selon la revendication 14, **caractérisé en ce que** la matrice est un polymère thermoplastique ou thermodurcissable, ou une matière cimentaire.

**Patentansprüche**

1.  Glasfaser oder Struktur aus Glasfasern, beschichtet mit einer elektrisch leitenden Beschichtungszusammensetzung, die in Gew.-% von Feststoffen umfasst:

    - 6 bis 50 % eines filmbildenden Mittels, vorzugsweise 6 bis 45 %,
    - 5 bis 40 % mindestens einer Verbindung, ausgewählt aus den Weichmachern, den Tensiden und/oder den Dispergiermitteln,
    - 20 bis 75 % elektrisch leitende Partikel,
    - 0 bis 10 % eines Dotierungsmittels,
    - 0 bis 10 % eines Verdickungsmittels,
    - 0 bis 15 % Zusatzstoffe.

2.  Faser oder Struktur nach Anspruch 1, **dadurch gekennzeichnet, dass** das filmbildende Mittel ein Polymer ist, vorzugsweise mit elastomerem Charakter.

3.  Faser oder Struktur nach Anspruch 2, **dadurch gekennzeichnet, dass** das filmbildende Mittel aus den Polyvinylpyrrolidonen, den Polyvinylalkoholen, den Polyacrylen, den Styrolpolymeren, den Polyvinylchloriden, den Polyurethanen und ihren Mischungen ausgewählt ist.

4.  Faser oder Struktur nach einem der Ansprüche 1 bis 3, **dadurch gekennzeichnet, dass** der Weichmacher, das Tensid und/oder das Dispergiermittel aus den polyalkoxylierten, aliphatischen oder aromatischen, eventuell halogenierten Verbindungen, den polyalkoxylierten Fettsäureestern, den Amin-Verbindungen, den Siliciumderivaten und den Gemischen dieser Verbindungen ausgewählt ist.

5.  Faser oder Struktur nach einem der Ansprüche 1 bis 4, **dadurch gekennzeichnet, dass** die leitenden Partikel auf Kohlenstoff basieren, insbesondere Graphit- und/oder Rußpartikel sind.

6.  Faser oder Struktur nach Anspruch 5, **dadurch gekennzeichnet, dass** die Größe der Partikel 250 $\mu$m, vorzugsweise 100 $\mu$m nicht übersteigt.

7.  Faser oder Struktur nach einem der Ansprüche 1 bis 6, **dadurch gekennzeichnet, dass** 30 bis 60 % der Partikel ein Seitenverhältnis aufweisen, das von 5 bis 20 variiert.

8.  Faser oder Struktur nach einem der Ansprüche 1 bis 7, **dadurch gekennzeichnet, dass** mindestens 15 % der Partikel die Form von Schuppen oder Nadeln aufweisen.

9.  Verfahren zur Herstellung einer Glasfaser oder einer Struktur von Glasfasern nach einem der Ansprüche 1 bis 8, das die Schritte umfasst, bestehend aus:

    - Beschichten einer Glasfaser oder einer Struktur von Glasfasern mit einer leitenden Beschichtungszusammensetzung, die in Gew.-% vom Feststoffen umfasst:

       - 6 bis 50 % eines filmbildenden Mittels, vorzugsweise 6 bis 45 %,
       - 5 bis 40 % mindestens einer Verbindung, ausgewählt aus den Weichmachern, den Tensiden und/oder den Dispergiermitteln,
       - 20 bis 75 % elektrisch leitende Partikel,
       - 0 bis 10 % eines Dotierungsmittels,
       - 0 bis 10 % eines Verdickungsmittels,

       - 0 bis 15 % Zusatzstoffe.
    - Erhitzen der beschichteten Faser oder der Struktur auf eine Temperatur, die ausreichend ist, um das Wasser zu beseitigen und die leitende Beschichtung zu konsolidieren.

10. Verfahren nach Anspruch 9, **dadurch gekennzeichnet, dass** die Beschichtung durch Eintauchen in ein Bad der leitenden Beschichtungszusammensetzung erfolgt.

11. Verfahren nach Anspruch 9 oder 10, **dadurch gekennzeichnet, dass** das Erhitzen auf eine Temperatur von mehr als ungefähr 105 °C und weniger als ungefähr 220 °C, vorzugsweise weniger als ungefähr 160 °C, erfolgt.

**12.** Struktur aus Glasfasern nach einem der Ansprüche 1 bis 8, **dadurch gekennzeichnet, dass** sie in Form einer Anordnung von verflochtenen Fasern, z. B. eines Gewebes, oder von nicht verflochtenen Fasern, z. B. eines Vlieses wie eine Matte oder ein Tuch aus kontinuierlichen Fasern, oder eines Gitters, vorliegt.

**13.** Struktur nach Anspruch 12, **dadurch gekennzeichnet, dass** sie einen Wert der elektromagnetischen Abschirmung aufweist, der zwischen 5 und 50 dB, vorzugsweise zwischen 5 und 35 dB liegt, gemessen zwischen 100 MHz und 2,7 GHz.

**14.** Verbundmaterial, umfassend eine Matrix, die durch Glasfasern oder eine Struktur aus Glasfasern nach einem der Ansprüche 1 bis 8, 12 oder 13 verstärkt ist.

**15.** Material nach Anspruch 14, **dadurch gekennzeichnet, dass** die Matrix ein thermoplastisches oder wärmehärtbares Polymer oder ein zementartiger Stoff ist.

## Claims

**1.** Glass strand or glass strand structure coated with an electrically conducting coating composition which comprises as % by weight of solid matter:

- 6 to 50% of a film-forming agent, preferably 6 to 45%,
- 5 to 40% of at least one compound chosen from plasticizing agents, surface-active agents and/or dispersing agents,
- 20 to 75% of electrically conducting particles,
- 0 to 10% of a doping agent,
- 0 to 10% of a thickening agent,
- 0 to 15% of additives.

**2.** Strand or structure according to Claim 1, **characterized in that** the film-forming agent is a polymer, preferably with an elastomeric nature.

**3.** Strand or structure according to Claim 2, **characterized in that** the film-forming agent is chosen from polyvinylpyrrolidones, poly(vinyl alcohol)s, polyacrylics, styrene polymers, poly(vinyl chloride)s, polyurethanes and the blends of these polymers.

**4.** Strand or structure according to one of Claims 1 to 3, **characterized in that** the plasticizing, surface-active and/or dispersing agent is chosen from optionally halogenated, aliphatic or aromatic, polyalkoxylated compounds, from polyalkoxylated fatty acid esters, from amino compounds, from silica derivatives and from the blends of these compounds.

**5.** Strand or structure according to one of Claims 1 to 4, **characterized in that** the conducting particles are based on carbon, in particular are graphite and/or carbon black particles.

**6.** Strand or structure according to Claim 5, **characterized in that** the size of the particles does not exceed 250 $\mu$m, preferably 100 $\mu$m.

**7.** Strand or structure according to one of Claims 1 to 6, **characterized in that** 30 to 60% of the particles have an aspect ratio which varies from 5 to 20.

**8.** Strand or structure according to one of Claims 1 to 7, **characterized in that** at least 15% of the particles have a flake or needle shape.

**9.** Process for the preparation of a glass strand or of a glass strand structure according to one of Claims 1 to 8 which comprises the stages consisting in

- coating a glass strand or glass strand structure coated with an electrically conducting coating composition which comprises as % by weight of solid matter:

- 6 to 50% of a film-forming agent, preferably 6 to 45%,
- 5 to 40% of at least one compound chosen from plasticizing agents, surface-active agents and/or dispersing agents,
- 20 to 75% of electrically conducting particles,
- 0 to 10% of a doping agent,
- 0 to 10% of a thickening agent,
- 0 to 15% of additives, and

- heating the said coated strand or the said coated structure at a temperature sufficient to remove the water and to strengthen the conducting coating.

10. Process according to Claim 9, **characterized in that** the coating is carried out by immersion in a bath of the conducting coating composition.

11. Process according to Claim 9 or 10, **characterized in that** the heating is carried out at a temperature of greater than approximately 105°C and less than approximately 220°C, preferably less than approximately 160°C.

12. Glass strand structure according to one of Claims 1 to 8, **characterized in that** it is provided in the form of an assemblage of intertwined strands, for example a fabric, or nonintertwined strands, for example a nonwoven, such as a mat or a veil of continuous strands, or a grid.

13. Structure according to Claim 12, **characterized in that** it exhibits a value of electromagnetic shielding between 5 and 50 dB, preferably between 5 and 35 dB, measured between 100 MHz and 2.7 GHz.

14. Composite material comprising a matrix reinforced by glass strands or a glass strand structure according to one of Claims 1 to 8, 12 or 13.

15. Material according to Claim 14, **characterized in that** the matrix is a thermoplastic or thermosetting polymer or a cementing material.

**FIG. 1**

**FIG. 2**

**EP 1 716 085 B1**

## RÉFÉRENCES CITÉES DANS LA DESCRIPTION

**Documents brevets cités dans la description**

- US 3269883 A
- US 3247020 A
- US 4090984 A
- US 4209425 A
- WO 9944956 A